# EUROPEAN PATENT APPLICATION

(11) **EP 3 016 039 A1**
(43) Date of publication of application: **04.05.2016**
(21) Application number: 15000573.4
(22) Date of filing: 27.02.2015
(51) Int. Cl.: G06Q 10/02

(54) **Dynamic packaging for re-accommodation**

(30) Priority: 30.10.2014 US 201414528243
(71) Applicant: Amadeus S.A.S., 06410 Biot (FR)
(72) Inventor: Lamoureux, Yann, 06410 Biot (FR); Monteil, Nicolas, 06270 Villeneuve Loubet (FR); Mathieu, Maxime, 06220 Vallauris (FR); Tran, Bertrand, 06600 Antibes (FR)
(74) Representative: Samson & Partner Patentanwälte mbB

(57) **Abstract**

Methods, systems, and computer program products for building customized packages based upon a disruption impacting an itinerary. Packages may contain a travel solution and a service. The content of each package may be based up on data relating to passenger preferences, data relating to trip context, and availability data retreived from an availability database, as well as policy-building rules.

## Description

### BACKGROUND

The invention generally relates to computers and computer systems and, in particular, to methods, systems, and computer program products for reacting to disruptions that impact an itinerary.

Computer technology is used in the travel industry to manage and support travel reservations, as well as the associated data. In particular, reservation agents (i.e., travel agencies) may book travel by remotely interfacing with a reservation system that in turn interfaces with inventory systems of one or more travel merchants (e.g., airlines, rail travel providers, bus travel providers, etc.) to book one or more travel inventory items from the one or more travel merchants. The reservation agent may create and/or modify a Passenger Name Record (PNR) with a travel reservation device (e.g., a terminal used by a travel agent) to initialize a reservation session with the reservation system and thereby book a travel solution for a customer associated with the PNR.

After a travel solution is booked, an operational disruption may occur that impacts an itinerary of the travel solution. With respect to an airline as a travel carrier, an operational disruption of a flight may occur when a mechanical issue or weather-related problems force the airline to delay or cancel the flight. When a disruption occurs, the travel carrier may find a suitable replacement travel segment for the impacted passenger and those passengers who are similarly situated. The airline may compensate each passenger for the inconvenience caused by the disruption.

A disruption in a passenger's itinerary may generate frustration and can detract from a travel carrier's image. Correct disruption handling may be needed to maintain passenger satisfaction with the travel carrier and to retain its customers. However, a disrupted segment may have a cascading effect on the entire system as disrupted passengers scramble to get placed onto the most attractive and convenient alternative travel solutions. Thus, due to limited availability for these travel solutions, the disruption may be propagated if impacted passengers get transferred to already overbooked travel segments. In addition, disruption handling may be chaotic, providing long queues and stress due to passengers being uncertain about how the disruption will be resolved. Impacted passengers may become even more frustrated when inappropriate alternatives are proposed and from feeling detached from the re-accommodation process. Further, often all of the passengers scheduled to travel on the impacted segment are simultaneously notified, either by a verbal announcement by the travel carrier, an electronic message, or an update to a public schedule. The group notification may increase frustration and stress by creating a group panic situation as all of the passengers scramble to rebook on alternative segments before the most convenient segments are filled.

From the travel carrier's perspective, disruption handling can be expensive. Often, the travel carrier must absorb the costs when passengers scheduled to travel on low yield or low value seats are rebooked into high yield seats. Lower value customers may be given more convenient accommodations over higher value customers simply because the lower value customer contacted the travel carrier first and was awarded the most convenient travel solution. Due to dissatisfaction, higher value customer may avoid future bookings with the travel carrier. Further, different passengers have different trip contexts, e.g., leisure travel and business travel. The trip context of the passenger may not be taken into account, resulting in leisure travelers being booked on the more attractive replacement segments before business travelers, who may be subject to constraints such as business meetings or events.

Thus, improved systems, methods, and computer program products are needed to re-accommodate passengers experiencing a disruption in their travel itinerary by providing them dynamic package solutions.

### SUMMARY

In an embodiment of the invention, a method of accommodating a passenger traveling in accordance with an itinerary is provided. The method includes receiving, at a computer system, a notification of a disrupted segment, and communicating a message based upon the notification of the disrupted segment over a network to an electronic device of a passenger associated with an itinerary that includes the disrupted segment. The method further includes, in response to the message, receiving, at the computer system, a request originated at the electronic device to modify the itinerary. In response to receiving the request, the computer system may identify a plurality of package-building policies based upon data in a passenger name record, data representing the itinerary, and one or more rules for each package-building policy. For each package-building policy, a first availability database may be queried to determine at least one replacement segment. One or more travel solutions may be computed for each package-building policy in which the data representing the itinerary is modified to replace the disrupted segment with the at least one replacement segment. A second availability database may be queried to determine one or more services for the one or more travel solutions of each package-building policy based at least in part on the data in the passenger name record and the data representing the itinerary. For each package-building policy, a package is built that includes a first selection from the one or more travel solutions and a second selection from the one or more services.

In another embodiment of the invention, a system for accommodating a passenger traveling in accordance with an itinerary is provided. The system comprises a processor and a memory including instructions that, when executed by the processor, cause the system to receive a notification of a disrupted segment and to communicate a message based upon the notification over a network to an electronic device of a passenger associated with an itinerary that includes the disrupted segment. In response to the message, a request to modify the itinerary may be originated at the electronic device and received at the computer system. In response to receiving the request, the computer system may identify a plurality of package-building policies based upon data in a passenger name record, data representing the itinerary, and one or more rules for each package-building policy. For each package-building policy, a first availability database may be queried to determine at least one replacement segment. One or more travel solutions may be computed for each package-building policy in which the data representing the itinerary is modified to replace the disrupted segment with the at least one replacement segment. A second availability database may be queried to determine one or more services for the one or more travel solutions of each package-building policy based at least in part on the data in the passenger name record and the data representing the itinerary. For each package-building policy, a package is built that includes a first selection from the one or more travel solutions and a second selection from the one or more services.

In another embodiment of the invention, a computer program product is provided. The computer program product comprises a non-transitory computer-readable storage medium and instructions stored on the non-transitory computer-readable storage medium that, when executed by a processor, cause a computer system to receive a notification of a disrupted segment and to communicate a message based upon the notification over a network to an electronic device of a passenger associated with an itinerary that includes the disrupted segment. In response to the message, a request to modify the itinerary may be originated at the electronic device and received at the computer system. In response to receiving the request, the computer system may identify a plurality of package-building policies based upon data in a passenger name record, data representing the itinerary, and one or more rules for each package-building policy. For each package-building policy, a first availability database may be queried to determine at least one replacement segment. One or more travel solutions may be computed for each package-building policy in which the data representing the itinerary is modified to replace the disrupted segment with the at least one replacement segment. A second availability database may be queried to determine one or more services for the one or more travel solutions of each package-building policy based at least in part on the data in the passenger name record and the data representing the itinerary. For each package-building policy, a package is built that includes a first selection from the one or more travel solutions and a second selection from the one or more services.

### BRIEF DESCRIPTION OF THE SEVERAL VIEWS OF THE DRAWINGS

The accompanying drawings, that are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including travel carrier systems in communication with electronic devices via a network.
FIG. 2 is a diagrammatic view of an exemplary computer system of FIG. 1.
FIG. 3 is a schematic view of a dynamic disruption packaging system including a notification module, an execution module, and a package building module.
FIG. 4 is a graphical view of an exemplary set of two package building policies.
FIG. 5 is a graphical view of an exemplary set of actions and corresponding data flow between a passenger, a dynamic disruption packaging system, and various travel carrier systems.
FIG. 6 is a graphical view of an exemplary itinerary with a disrupted segment and three proposed packages.
FIG. 7 is a flowchart of a package building and filtering process that may be performed by the dynamic disruption packaging system of FIG. 3.
FIG. 8 is a flowchart of a passenger satisfaction determination process that may be performed by the package building and filtering process of FIG. 7.

### DETAILED DESCRIPTION

Embodiments of the invention are directed to methods and systems for re-accommodating one or more passengers travelling in accordance with an itinerary or journey and experiencing a disruption in a portion or segment of their itinerary. Embodiments of the invention may be implemented by a dynamic disruption packaging system comprising one or more networked computers or servers. The networked computers may provide processing and database functions for travel-related systems and modules that re-accommodate passengers.

The packaging system may include a notification module for receiving information relating to a disrupted segment of the travel carrier and for processing this information. The notification module may further retrieve a list of all passengers scheduled to travel along the impacted segment. At suitable intervals, or as new information is received, the notification module may send notifications to a selected subset of the passengers in the list to notify these passengers of the disruption. These notifications may be received b the disrupted passengers on an electronic device associated with the passenger or any touch point in the travel where the passenger is serviced. As such, the notification module may control the throughput of the notifications sent to the passengers impacted by the disrupted segment. The notifications may be sent to the passenger's electronic device by way of an email or text message, whereby the passenger's cell phone number or email address are retrieved from a customer data system. The notification may be provided by an agent when prompted by the notification module or a message displayed to the passenger during any interaction with a computer system controlled by the travel carrier, such as a kiosk or a departure control user interface.

The packaging system may include a package building module for retrieving information relating to the passenger's trip context and preferences and creating a set of proposed re-accommodation packages for the impacted passenger's consideration and selection. A package may comprise at least one travel solution for replacing the impacted segment as well as at least one service for compensating the impacted passenger. The package building module may compare collected passenger preference and trip context information to a set of package building policies to create proposed re-accommodation packages for the passenger. The package building module may filter out package building policies that are not relevant or have low relevance with respect to the passenger's preferences or trip context before building packages. Further, the package building module may provide the top-most packages to the impacted passenger for consideration and selection.

Embodiments of the packaging system may further include an execution module for cancelling the disrupted segment from the impacted passenger's itinerary and rebooking the passenger onto any travel solutions associated with the package selected by the impacted passenger. The execution module may issue vouchers and compensation associated with the package selected by the impacted passenger. Embodiments of the execution module may also include features directed to building and providing a report for the impacted passenger, whereby the report explains all of the changes in the passenger's itinerary in light of the package selection.

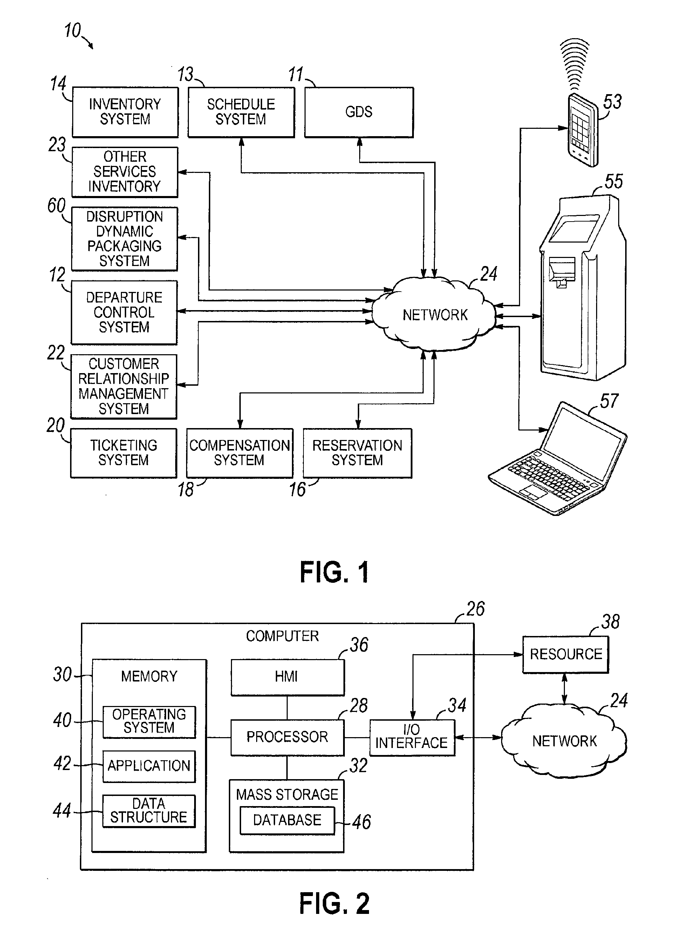

Referring now to FIG. 1, an operating environment 10 in accordance with an embodiment of the invention may include a Global Distribution System (GDS) 11, and may also or alternatively include one or more travel service provider systems, such as a schedule system 13, a departure control system 12, an inventory system 14, a reservation system 16, a compensation system 18, a ticketing system 20, a customer relationship management system 22, a services inventory 23, and a disruption dynamic packaging system 60. Each of the GDS 11, schedule system 13, departure control system 12, inventory system 14, reservation system 16, compensation system 18, ticketing system 20, customer relationship management system 22, services inventory 23, and a disruption dynamic packaging system 60 may communicate through a network 24. Schedule system 13, departure control system 12, inventory system 14, reservation system 16, compensation system 18, ticketing system 20, customer relationship management system 22, services inventory 23, and disruption dynamic packaging system 60 or any combination thereof, may be provided separate from the GDS 11 or may be provided by the GDS 11 or controlled by GDS 11. Network 24 may include one or more private or public networks (e.g. the Internet) that enable the exchange of data.

Referring now to FIG. 2, the GDS 11, schedule system 13, departure control system 12, inventory system 14, reservation system 16, compensation system 18, ticketing system 20, customer relationship management system 22, services inventory 23, and disruption dynamic packaging system 60 of operating environment 10 may be implemented on one or more computer devices or systems, such as exemplary computer system 26. The computer system 26 may include a processor 28, a memory 30, a mass storage memory device 32, an input/output (I/O) interface 34, and a Human Machine Interface (HMI) 36. The computer system 26 may also be operatively coupled to one or more external resources 38 via the network 24 or I/O interface 34. External resources may include, but are not limited to, servers, databases, mass storage devices, peripheral devices, cloud-based network services, or any other suitable computer resource that may used by the computer system 26.

The processor 28 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 30. Memory 30 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 32 may include data storage devices such as a hard drive, optical drive, tape drive, non-volatile solid state device, or any other device capable of storing information.

Processor 28 may operate under the control of an operating system 40 that resides in memory 30. The operating system 40 may manage computer resources so that computer program code embodied as one or more computer software applications, such as an application 42 residing in memory 30, may have instructions executed by the processor 28. In an alternative embodiment, the processor 28 may execute the application 42 directly, in which case the operating system 40 may be omitted. One or more data structures 44 may also reside in memory 30, and may be used by the processor 28, operating system 40, or application 42 to store or manipulate data.

The I/O interface 34 may provide a machine interface that operatively couples the processor 28 to other devices and systems, such as the network 24 or external resource 38. The application 42 may thereby work cooperatively with the network 24 or external resource 38 by communicating via the I/O interface 34 to provide the various features, functions, applications, processes, or modules comprising embodiments of the invention. The application 42 may also have program code that is executed by one or more external resources 38, or otherwise rely on functions or signals provided by other system or network components external to the computer system 26. Indeed, given the nearly endless hardware and software configurations possible, persons having ordinary skill in the art will understand that embodiments of the invention may include applications that are located externally to the computer system 26, distributed among multiple computers or other external resources 38, or provided by computing resources (hardware and software) that are provided as a service over the network 24, such as a cloud computing service.

The HMI 36 may be operatively coupled to the processor 28 of computer 26 in a known manner to allow a user to interact directly with the computer 26. The HMI 36 may include video or alphanumeric displays, a touch screen, a speaker, and any other suitable audio and visual indicators capable of providing data to the user. The HMI 36 may also include input devices and controls such as an alphanumeric keyboard, a pointing device, keypads, pushbuttons, control knobs, microphones, etc., capable of accepting commands or input from the user and transmitting the entered input to the processor 28.

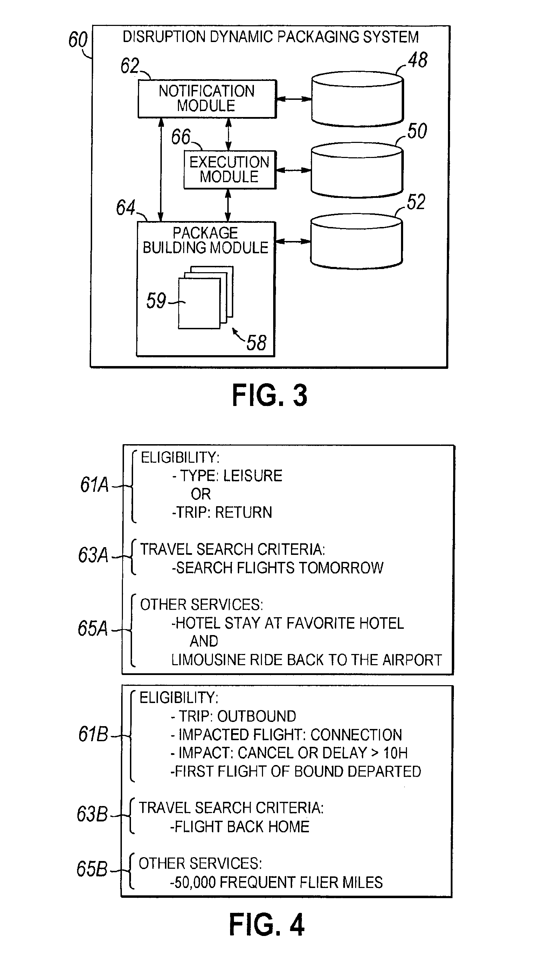

A database 46 may reside on the mass storage memory device 32, and may be used to collect and organize data used by the various systems and modules described herein. The database 46 may include data and supporting data structures that store and organize the data. In particular, the database 46 may be arranged with any database organization or structure including, but not limited to, a relational database, a hierarchical database, a network database, or combinations thereof. A database management system in the form of a computer software application executing as instructions on the processor 28 may be used to access the information or data stored in records of the database 46 in response to a query, where a query may be dynamically determined and executed by the operating system 40, other applications 42, or one or more modules. In an embodiment of the invention, the database 46 may comprise a transaction database 48 (FIG. 3) comprising notification data that provides information relating to passenger notifications, a transaction database 50 (FIG. 3) comprising execution data that provides information relating to the packages offered and selected by individual passengers, or a transaction database 52 (FIG. 3) comprising package building data relating to package building policies, available travel solutions, and available services for use in constructing packages to re-accommodate passengers.

Referring now to FIG. 3, disruption dynamic packaging system 60 may include a notification module 62, a package building module 64, an execution module 66, transactional database 48, transaction database 50, and transaction database 52. Packaging system 60 may be provided by one or more of the GDS 11, schedule system 13, departure control system 12, inventory system 14, reservation system 16, compensation system 18, ticketing system 20, customer relationship management system 22, services inventory system 23, or any other suitable computer system, or any combination thereof.

In operation, notification module 62 receives disruption data characterizing a disruption of a segment in an underlying travel industry or travel carrier associated with packaging system 60, for example, an airline industry. The disruption may be an actual disruption or a disruption anticipated by the travel carrier. In an embodiment of the invention, the disruption data may be generated by schedule system 13 and provided to notification module 62 by way of network 24. With respect to an airline travel carrier, the disruption data may comprise a flight number, an airline name, flight cancellation, a change to an origin for a flight, a change to a destination for the flight, a change to the arrival time or the departure time of the flight, a travel date and time, a change to the aircraft resulting in a change in cabin structure and/or capacity resulting in overbooking, rerouting of the aircraft, a diversion of the aircraft to a different airport due to, e.g., inclement weather, or any other suitable data characterizing the disruption.

Notification module 62 receives disruption data and retrieves an impacted passengers list. The impacted passengers list may include a plurality of parameters for each impacted passenger that characterizes the impacted passenger and the impacted passenger's relationship with the disrupted segment. These parameters may include, but are not limited to, a passenger name record containing the passenger's full itinerary, an identity of the passenger, a phone number, an email address, a mailing address, a price being charged for the travel service, a method of payment, a reservation code, a method of payment, a name or company associated with the account, a class of service, or any other suitable data characterizing the impacted passenger. The parameters may indicate passengers traveling together so the disruption dynamic packaging system 60 may group these passengers together for package building purposes. These parameters may further include information relating to the impacted passenger's relationship with a travel carrier associated with the impacted segment. These parameters may include, but are not limited to, customer loyalty data, passenger value information, previous disruption history, travel history, passenger preferences (e.g., preferred hotels and/or services), or any other suitable data characterizing the impacted passenger. In an embodiment of the invention, the impacted passenger list and the plurality of parameters for each impacted passenger may be generated by one or both of reservation system 16 and customer relationship management system 22 and provided to notification module 62 by way of network 24.

After notification module 62 receives the impacted passenger list, notification module 62 may rank each passenger in the impacted passenger list according to the impacted passenger's value with respect to the underlying travel carrier. Notification module 62 thereafter notifies each impacted passenger preferably in order of the ranking with the highest value passengers receiving notification of the disruption before the lowest value passengers. The notification may comprise a message sent to the electronic device of each impacted passenger. As such, notification module 62 may control the throughput of the notifications within the list of passengers to ensure the widest range of re-accommodation options are offered to the highest value customers, as seating on the best or most convenient alternative segments is often limited. The notification throughput is controlled by tracking the notification messages that are sent to the impacted passengers and by tracking subsequent actions done by the passengers. Generally speaking, after a notified passenger has chosen a package and processing is finished, another impacted passenger can be notified of the disruption and request alternative packages.

To minimize delays, the notified passengers are given a limited time duration to react to the receipt of the notification message by, for example, choosing a package before other passengers are notified. The limited time to react is configurable within packaging system 60 and may be tailored to the individual underlying travel industry or dynamically changed in accordance with disruption conditions or an administrator preference. The limited time may also be correlated to the passenger's value. Failure to respond to the notification may trigger a retry notification or may generate an alert in a call center application in order for the travel carrier to proactively call the impacted passenger instead of continuing to wait for the impacted passenger's reply. The courtesy call feature may be limited to high value customers or may be available to all customers.

Contact information is extracted from the plurality of parameters associated with each impacted passenger. In an embodiment of the invention, contact information is extracted from the associated passenger name record, the customer relationship management system, the loyalty program of the underlying carrier, or a combination thereof. Passenger notification may be by text message to a mobile phone, email, or other electronic means, or at passenger touchpoints such as a kiosk or a departure control user interface. In an embodiment of the invention, as part of the disruption handling of the underlying carrier, some impacted passengers may receive a default rebooking or re-accommodation (referred to hereinafter as "pre-booking") onto an alternative travel option when a disruption event occurs. In this situation, the pre-booking information can be supplied as part of the notification.

After an impacted passenger is notified of the disruption, packaging system 60 waits for the impacted passenger to make an affirmative request for re-accommodation packages. With reference to FIGS. 1, 3, and 5, an exemplary impacted passenger 54 typically has access to a communication device 53, a kiosk 55, or a computing device 57. For example, passenger 54 may receive a disruption notification on communication device 53 and thereafter affirmatively requests a set of packages from packaging system 60. The request for a set of packages is received by package building module 64. Package building module 64 is configured to construct the packages upon the passenger's request to ensure the most up-to-date information is available for use in building the packages. When a passenger responds to a disruption notification and requests re-accommodation packages, package building module 64 receives the request and advises notification module 62 that the passenger is active and in the process of choosing alternatives. As discussed above, this allows notification module 62 to track the throughput of the passenger re-accommodation. Passengers may supply information in the request for re-accommodation which may be used to filter packages during package building and provide the passenger with the most useful results. For example, if a passenger specifies in the request for re-accommodation that the passenger needs to arrive at a particular location by a certain time, packaging system 60 receives this information in the request and incorporates this information into the package building.

After receipt of a passenger request for packages, package building module 64 dynamically creates the packages based on information associated with the passenger and on the availability of underlying travel solutions and services. Information used in package building is retrieved from reservation system 16, customer relationship management system 22, schedule system 13, inventory system 14, compensation system 18, departure control system 12, ticketing system 20, services inventory 23, or any combination thereof.

Reservation system 16 provides the passenger name record and extended travel record associated with the passenger. This includes passenger information such as the name, other travelers, frequent flyer number, contact information, and trip information. Reservation system 16 provides package building module 64 with details regarding the context of the trip in order to deduce the passenger's ultimate destination and why the passenger is travelling to the destination. The trip purpose may be derived from the passenger name record information and different package building policies will apply based on whether the passenger is travelling for business purposes or leisure purposes. Customer relationship management system 22 provides information regarding the passenger beyond the current trip context, information that includes information such as the passenger preferences. Passenger preferences may include preferred ancillary services, preferred compensation media, preferred hotel chain, as well as information regarding previous disruption package selections. Additional information provided by customer relationship management system 22 may include passenger metrics such as lifetime value, passenger yield, or frequent flyer value; passenger information such as home location, members of the family, colleagues, other usual travel companions, gender, or age; and passenger history such as disruption history, booking history, or ancillary shopping history. Schedule system 13 provides information regarding alternative segments or alternative transportation services. Schedule system 13 also provides further information regarding the impacted segment and other segments in the passenger routing such as operational flight data. Operational flight data may include estimated departure and arrival timings, actual departure and arrival timings, and flight status.

Inventory system 14 provides information regarding the inventory of the underlying travel carrier as well as the inventory of other transportation services such as busses and trains. Inventory system 14 may further provide information relating to the general offerings of service providers such as hotels and car rental. Alternatively, this information may be provided by services inventory system 23. Alternatively, inventory system 14 and services inventory system 23 may work in conjunction to supply packaging system 60 with the most complete list of available services. As such, services inventory 23 may provide non-carrier type of information such as massage services, sightseeing tour services, shoe shine services, or any other service offered or available through packaging system 60. The availability of services may be stored at the services inventory system 23 in a database (e.g., database 46)and the availability of flight segments may be stored at the inventory system 14 in a database (e.g., database 46), which may each be queried to determine flight segments and/or services matching the query parameters.

Compensation system 18 provides information regarding the legal compensation and airline defined compensation that is due to the passenger in the disruption context, based on the pre-booked option provided to the passenger or the earliest available flight. Departure control system 12 provides operational information about a passenger, including check-in status and baggage information. Ticketing system 20 provides information regarding the passenger's tickets and electronic miscellaneous documents (EMDs).

Referring now to FIGS. 3 and 4, package building module 64 incorporates a set of package building policies 58 that drives the selection of travel solutions and determines what services can be provided around the particular travel solution. Each package building policy 59 in set 58 describes rules for building a package 68. Each package 68 generally includes a travel solution 70 and at least one service 72. Travel solutions 70 are directed to where and how the impacted passenger will travel if the impacted passenger selects the associated package 68. Each service 72 is directed to what benefits or perks the impacted traveler will be granted if the passenger selects the associated package 68. However, not all policies 59 in set 58 are applicable for every passenger and impacted segment. Therefore, package building module 64 incorporates the specific trip context and passenger data into the package building to provide a dynamically built set of customized packages for each impacted passenger.

In one embodiment of the invention, package building module 64 initiates the following process for building a set of customized packages 68 for an impacted passenger. Initially, package building module 64 calculates the relevance of each package building policy 59 in set 58 based on the trip context and passenger information gathered from one or more of the systems described above and shown in FIG. 1. Each package building policy 59 defines a set of hard rules 61 that are used to determine the relevance of the particular package building policy 59 with respect to the passenger and trip context. If a particular package building policy 59 is determined to be not relevant, the particular policy 59 is dropped from consideration in the package building process. If the particular package building policy 59 is determined to be relevant, the particular policy 59 is assigned a relevance score. For example, as shown in FIG. 4, one package building policy 59A includes rules 61A directed to finding a flight for the impacted passenger the next day if the passenger is on a leisure trip and the passenger is returning home. Another package building policy 59B include rules 61B directed to searching for flights back home rather than to initial destination if the passenger is already past the first leg of a trip and the impact of the disruption will be a cancellation or a delay of greater than ten hours at the current location. Other impacted passengers scheduled to travel on the same impacted segment may be travelling for business purposes, may not be on a return leg of a trip, or any other changes in the trip context. Thus, package building module 64 custom tailors packages 68 for each impacted passenger by applying rules 61 to that particular passenger's trip context and information. The set of hard rules 61 provide a mechanism for determining whether each policy 59 in set 58 is relevant for that particular impacted passenger.

In addition to each package building policy 59 including hard rules 61 to determine relevance, package building module 64 further applies a set of soft rules for use in determining when a package building policy 59 may apply depending on the underlying passenger data. If a package building policy 59 is determined to be not relevant with respect to these soft rules, the package building policy is removed from consideration. The relevance score is calculated or updated for any package building policy 59 that survive the soft rules check. One example of a soft rules check may be to only propose or apply an "upgrade" package building policy 59 to passengers with a value greater than a particular threshold. If a particular passenger has a value lower than the threshold, the policy 59 is removed from further consideration in package building. In an embodiment of the invention, the trip context and passenger data are taken from reservations system 16 and customer relationship management system 22. Further, each package building policy 59 is assigned a relevance score from the hard rules check as well as a relevance score from the soft rules check and these scores are combined to get the overall relevance score of the particular package building policy 59.

After the initial determination of applicability and relevance for each package building policy 59 in set 58, package building module 64 gathers alternative travel solutions 70 for the particular impacted passenger. For each applicable package building policy 59, package building module 64 searches for a possible alternative segments or journeys using a travel solution search criteria 63 provided by the applicable policy 59. For example, as shown in FIG. 4, travel solution search criteria 63A of policy 59A is directed to searching for flights departing on the next day, while travel solution search criteria 63B of policy 59B is directed to searching for flights to the impacted passenger's home airport. The availability of alternative journeys or segments may be obtained by directly contacting the corresponding inventory, relying on information available through GDS 11, or relying on a local inventory administered by the travel carrier on predefined agreements. Only the travel solutions respecting the search criteria 63 of the particular package building policy 59 and that have sufficient availability are retained. This generates a list of possible travel solutions 70 for each particular building policy 59. If travel solutions 70 are not found for a policy 59, the policy 59 is removed from set 58 of applicable policies 59. The availability of flights or other transportation modes are checked by taking into account parameters such as the availability on the desired class of service, availability of the passenger special services on the proposed flights or travel segments, value of the passenger, value of fare paid and also takes into account what is currently being offered to other passengers by package building module 64, and may updated availability information when other users have made a selection.

After the list of travel solutions 70 is constructed, a list of possible services 72 is constructed using a service search criteria 65 provided in each policy 59. Package building module 64 reviews available services and determines what is relevant for each given package building policy 59, taking into account the trip context and the passenger profile. This provides a list of possible services 72 that are grouped by service type for each policy 59. For example, if a disruption occurs in New York City, and the particular package building policy 59 is directed to a night stay-over, package building module 64 retrieves the list of hotels available in New York City for use within a package 68. The availability of each additional service 72 is then obtained by directly contacting the corresponding provider inventory, relying on the information available through GDS 11, or relying on a local inventory administered by the carrier based on predefined agreements. Similar to the travel solution availability, the services availability is thereafter tuned based on what is currently being offered to other passengers by package building module 64. A particular package building policy 59 may define some mandatory and some optional service types. If any of the mandatory service types are unavailable, the corresponding travel solution 70 is removed from the list of possible travel solutions 70. Likewise, if there are no more travel solutions 70 for the particular package building policy 59, the entire policy 59 is removed from set 58.

At this stage in the package building process, package building module 64 holds the filtered list of package building policies 59 for the impacted passenger, a list of possible travel solutions 70 for each applicable policy, and a list of possible additional services 72 grouped by service type for each travel solution 70. The next step in the package building process is the creation of one package 68 per applicable package building policy 59 by selecting from among the possible travel solutions 70 and additional services 72 associated with each travel solution 70. In one embodiment of the invention, the selection is based on a combination of (1) the cost to the carrier; (2) the passenger satisfaction; and (3) the passenger importance.

To determine the cost to the carrier, package building module 64 takes into consideration the yield of the seat that is taken by the particular travel solution 70, the cost of the associated services 72 that are part of the particular package 68, the yield of the seat that is freed if the impacted passengers is transferred out of the pre-booked option, legal compensation that is due if the pre-booked solution is applied compared to the compensation saved if the passenger voluntarily chooses an alternative package 68, the cost of the legal compensation due on the earliest leaving available travel solution proposed to the passenger if the passenger was not pre-booked, the probability that the passenger will claim for the legal compensation, the cost of the company compensation default policy for the pre-booked option which may be lower or higher than the legal compensation, or any combination thereof.

To determine passenger satisfaction, package building module 64 considers a combination of (1) the value of the package 68; (2) the relevance of the package 68 with respect to the associated package building policy 59; and (3) the relevance of the package 68 for the passenger. The value of the package 68 is the absolute value of the package proposed to the impacted passenger. The value is determined without consideration of the underlying package building policy 59 and its relevance score or overall applicability to the passenger's preferences or trip context. The value is determined solely based on the quality of the travel solution 70 and the associated services 72 within the package 68. For example, package building module 64 may calculate the value of a travel solution 70 based on carrier-defined rules, and for example may be calculated from the elapsed flying time, the elapsed time with other transportation carriers or services, the elapsed ground time, the number of stops, the class of service of each leg, any upgrades provided in the proposed travel solution 70, and any combination thereof. Similarly, the value of the services 72 may take into account parameters such as the amount of stars designated to a hotel.

The relevance of the package with respect to the associated package building policy 59 is determined by comparing how closely the package 68 matches the associated travel solution search criteria 63 and services search criteria 65. The affinity or match between package 68 and travel solution search criteria 63 and services search criteria 65 changes for each package building policy 59. For example, a policy directed to getting the passenger to the desired destination as soon as possible will consider the difference between the original arrival time and the new arrival time of the proposed travel solution 70 and use this difference to determine the relevance of the package 68 with respect to that particular package building policy 59. Conversely, a policy 59 directed to providing relaxation to the passenger will not consider the difference between the original arrival time and the new arrival time of the proposed travel solution 70.

The relevance of the package with respect to the passenger or the perceived value is determined by comparing how closely the package components align with the passenger's preferences. A score is calculated and this score indicates whether the package 68 will likely receive neutral, favorable, or negative feedback from the passenger based on the information gathered regarding the trip context and the passenger preferences. For example, a package 68 incorporating the passenger's favorite hotel chain will be given a favorable score. This mechanism may be provided by the customer relationship management system 22.

The final step in constructing the set of packages 68 to be delivered to the impacted passenger is to filter and rank the package building policies 59 based on the package 68 associated with each policy 59. The policies 59 are ranked according to the value of the packages 68, the relevance of the package 68 with respect to the policy 59, the relevance or perceived value of the package 68 to the impacted passenger, the relevance of the policy 59 based on the trip context and the passenger information, or any combination thereof. In one embodiment of the invention, extreme outlier values are removed and the ranking is applied to the remaining packages 68. Thereafter, only the top ranked packages 68 and policies 59 are proposed to the impacted passenger. In one embodiment of the invention, any pre-booked options are always proposed as a choice to the impacted passenger, regardless of the associated ranking. Throughout the package building process, package building module 64 interacts and stores contextual data needed for the package building within database 52 for retrieval as needed. This information may be used to fine tune the availability of the packages. After the packages 68 and policies 59 are customized, filtered, and ranked, the set of top packages 68 are delivered to the impacted passenger by packaging system 60 for consideration and selection by the passenger. The delivery may be executed by way of a text message, email, self-service check-in kiosk, mobile application, or any other method of communication with the impacted passenger.

After the set of top packages 68 are delivered to the impacted passenger, package building system 60 waits a predetermined time to receive the passenger's selection. The passenger may reply to the package building system 60 to refine the package. For example, the passenger may ask for later flights providing these flights are still suitable with the services provided by the associated package and within the travel carrier accepted limitations. If no refinement is required, or the refined packages are suitable for the passenger, the passenger selects a package 68.

After the passenger selects package 68, execution module 66 collects the information about the selected package 68 and contacts the different systems to book the travel selection 70 of the selected package 68 and any services 72 associated with the selected package 68. For example, if the disruption occurs with an airline carrier, execution module 66 may contact reservation system 16 to cancel the itinerary, including the disrupted flight, and book the new flight and services of the selected package 68. Execution module 66 may also contact ticketing system 20 to update the tickets and determine miscellaneous document(s) corresponding to the new flight and departure control system 12 to cancel an acceptance on any previous flights and automatically request the acceptance on the new flight if the passenger was previously accepted already on another flight. As part of this process, the passenger is re-seated and baggage transferred onto the new flight if required. Further, any associated services 72 are booked and vouchers issued if applicable. Execution module 66 decrements the associated inventory systems for each booking of travel solutions and issuance of services or vouchers, either by a direct sale to the inventory system, execution through GDS 11, or by decrementing a local inventory counter through other services inventory system 23.

Execution module 66 also manages the context of the entire disruption process, storing data in transaction database 50 and keeping the history of all packages 68 proposed to each passenger and the passengers' choices. Each time package building module 64 proposes new packages to impacted passengers, execution module 66 stores these proposed packages 68 and increments for each travel solution 70 and services 72 the potential bookings that are pending and awaiting passenger selection. When a passenger selects a package 68, execution module 66 automatically updates the context information by deleting all the potential bookings of the packages 68 proposed to the corresponding passenger. Execution module 66 also informs notification module 62 that the passenger has been re-accommodated to allow notification module 62 to notify the next passengers in the list and maintain management of the notification throughput. Consequently, packaging system 60 is aware of all potential bookings the impacted passengers can make at all times. This allows package building module 64 to consider the real availability of the travel solutions 70 in order to ensure that only packages 68 that can be delivered are proposed to impacted passengers.

At the end of the re-accommodation process, execution module 66 returns to the impacted passenger a report with the results of the execution, including the rebooking, ticket revalidation or re-issue, acceptance on new flights or travel solutions 70. Execution module 66 may also delivers the new boarding passes, vouchers, or any other ticket or forms the passenger may require. In an embodiment of the present invention, execution module 66 stores the selected package 68 for a passenger in the passenger's profile for use in future re-accommodation processing. The information may be sent or stored in customer relationship management system 22 for future use in determining the passenger's preferences based on historical data.

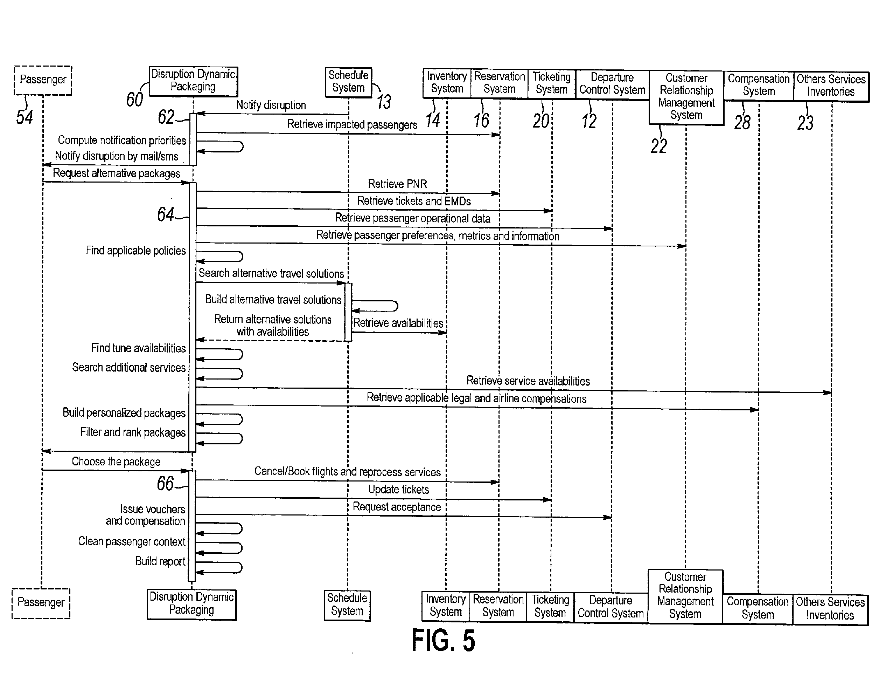

Referring now to FIG. 5, the general process for building packages 68 is shown and diagrammed therein. The process starts with schedule system 13 receiving information regarding a disrupted segment. Schedule system 13 notifies packaging system 60 of the disruption or potential disruption. Thereafter, packaging system 60 retrieves a set of impacted passengers from reservation system 16. Working with this set of impacted passengers, packaging system 60 computes the notification priorities and ranks each passenger, or groups of passengers if a group of passengers are traveling together, in order of overall value to the underlying travel carrier. Packaging system 60 notifies passengers in order of their value and eventually notifies passenger 54 of the disruption, possibly by way of communication device 53, kiosk 55, or computing device 57. Packaging system 60 waits until passenger 54 affirmatively requests alternative packages 68 from packaging system 60. Thereafter, packaging system 60 retrieves the passenger name record of passenger 54 from reservation system 16. Packaging system 60 further retrieves ticketing information and EMD information from ticketing system 20, passenger operational data from departure control system 12, and passenger preferences, metrics, and information and history from customer relationship management system 22. After packaging system 60 retrieves the above information, packaging system 60 finds all applicable policies 59 from set 58 of package building policies 58. Packaging system 60 then pairs down set 58 into a set of applicable policies 59, searches for alterative travel solutions 70 within schedule system 13 and builds alternative travel solutions based off of policies 59. After a set of alternative travel solutions 70 is constructed, scheduling system ensures each travel solutions 70 is available by retrieving the availabilities from inventory system 14 and fine tune this availability based on the travel solutions currently being proposed to other passengers. The remaining travel solutions 70 are associated with a policy 59, whereby each policy 59 remaining provides service search criteria 65 for use in retrieving service availabilities from other services inventory system 23.

After the applicable services 72 are retrieved the applicable legal and carrier compensation rules are retrieved from compensation system 18. Inasmuch as packaging system 60 holds all applicable travel solutions 70, services 72, and legal and airline compensation rules, packaging system 60 thereby builds personalized packages 68 for passenger 54. Thereafter, packaging system 60 filters and ranks the remaining packages 68 according to the value of each package 68, the relevance of each package 68 with respect to its associated policy 59, and the relevance or perceived value of each package 68 to passenger 54. This provides a finalized customized set of packages for consideration by passenger 54. The finalized set of packages is thereafter delivered to passenger 54 for consideration. Passenger 54 chooses one package 68 and provides the selection to packaging system 60. Packaging 60 thereafter cancels and rebooks travel plans and reprocesses any services needed by way of reservation system 16. Tickets are updated within ticketing system 20 and acceptance is requested from departure control system 12. After the information for passenger 54 has been updated and rebooked, that packaging system 60 issues any vouchers or compensation passenger 54 is entitled to from the selected package 68. Packaging system 60 thereafter clears the passenger context information and builds a report to provide to passenger 54. The vouchers, compensation, and report are thereafter delivered to passenger 54 and the dynamic disruption packaging process is complete.

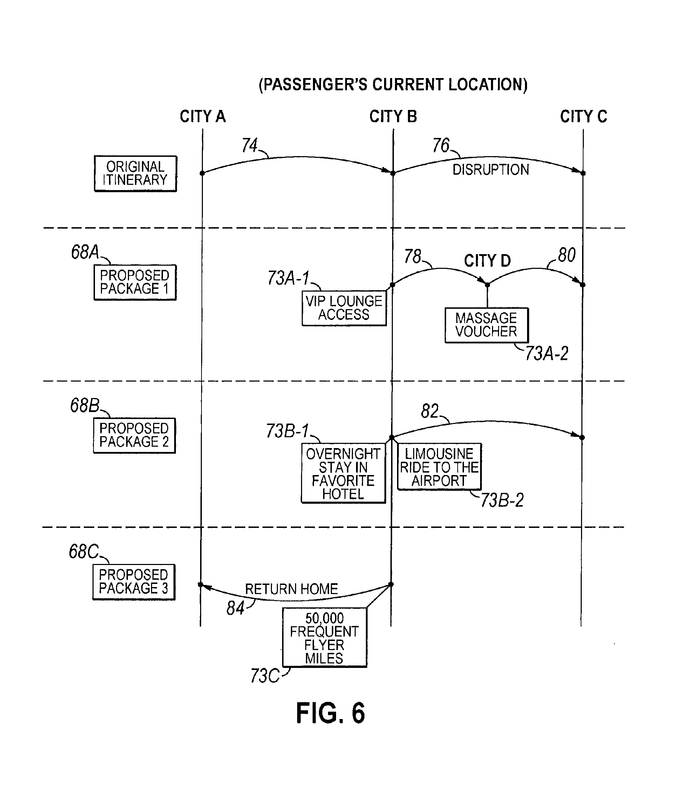

Referring now to FIG. 6, a set of available packages and the features thereof are illustrated with respect to the different travel solutions 70 and services 72 set 58 of travel policies 59 may generate. For example, a given passenger's original itinerary may include a flight from City A to City B and a flight from City B to City C. In accordance with the original itinerary, the passenger travels on a segment 74 from City A to City B. However, while the passenger is in route to City B or while the passenger is at City B, a disruption occurs that affects a segment 76, which provides travel from City B to City C. If passenger is schedule to travel on segment 76 in the passenger's original itinerary, packaging module 60 is alerted and sends the passenger a notification of a disruption. The passenger then affirmatively requests construction of a set of packages, which initiates the package building process of packaging module 60. After the packages are built in accordance with the package building policies 59, the top ranked packages 68 are provided to the passenger for review and selection.

For example, a proposed package 68A may offer a travel solution 70 whereby the passenger travels along a segment 78 from City B to City D and thereafter travels along a connecting segment 80 from City D to City C. This package is constructed to move passenger on to the original final destination of City C from City B. Inasmuch as package 68A requires the passenger to travel along two segments as opposed to the one original segment, the passenger is further compensated with two additional services 72 selected in accordance with the associated policy 59 and the passenger preferences and trip context. Service 73A-1 entitles the passenger to access the VIP lounge located inside the airport at City B. Service 73A-2 entitles the passenger to a free massage at the airport at City D while the passenger waits to travel along segment 80. This package may be attractive to the passenger in that the particular package moves the passenger along to the original destination while providing amenities to relax and keep the customer comfortable while the passenger is waiting.

Alternatively, a proposed package 68B may offer a travel solution 70 whereby the passenger travels from City B to City C directly over a segment 82. However, this flight isn't available until the next day, package 68B further compensates the passenger by providing two services 72. Service 73B-1 entitles the passenger to a one night stay in the passenger's favorite hotel or hotel chain. Information relating to the customer's hotel preference is retrieved by package building module 64 during the package building process. Further, service 73A-2 entitles the passenger to a limousine ride from the hotel to the airport the next day to eliminate the need to find transportation to the airport. This package may be attractive to the passenger in that the package moves the passenger on to the passenger's original destination while providing a hotel room in the passenger's favorite hotel to spend the overnight wait.

A proposed package 68C may offer a travel solution 70 whereby the passenger returns home to City A from City B along a segment 84. This package entitles the passenger to a service 73C that credits the passenger with 50,000 frequent flyer miles for use in future discounts on travel. Package 68C may be attractive to the passenger in that this particular package allows the passenger to return home instead of forcing the passenger to continue on with the disrupted trip.

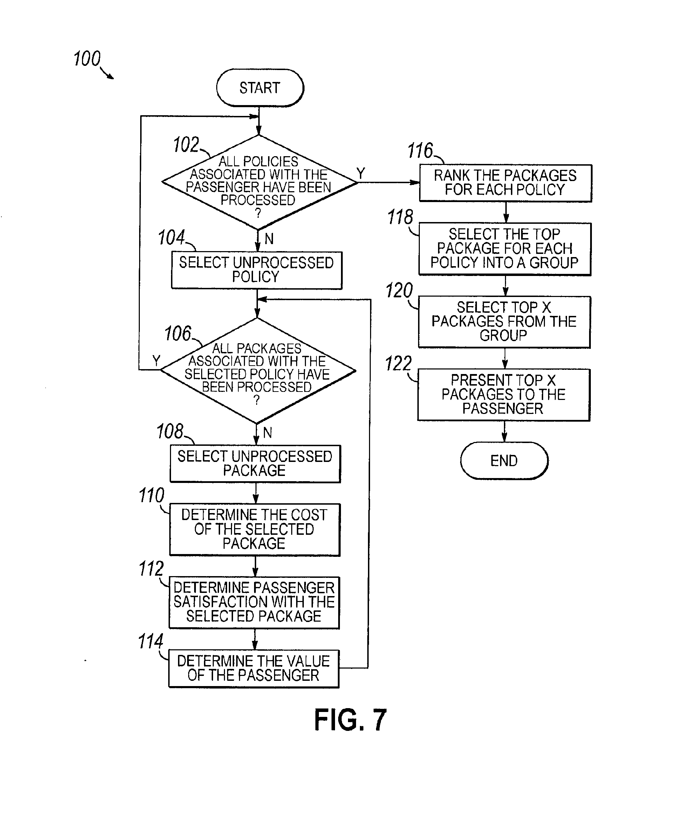

Referring now to FIG. 7, a flow chart depicts a process 100 that may be executed by packaging system 60 to build, rank, and filter packages 68 into the top packages 68 to present to the passenger. Process 100 operates after the applicability of each policy 59 is determined and after travel solutions 70 and services 72 are generated for each applicable policy 59. Process 100 builds packages 68 from the selected travel solutions 70 and services 72. Thereafter, process 100 ranks the built packages and provides the highest ranked to the passenger for consideration and selection.

Process 100 begins with block 102, wherein the process 100 may determine if all policies 59 associated with the impacted passenger have been considered by process 100. If a policy 59 has not been considered by process 100, no packages 68 have been built to reflect that policy 59. In block 102, if process 100 determines that all policies 59 associated with the impacted passenger have been considered ("YES" branch of decision block 102), the process 100 may proceed to block 116. Conversely, if process determines that all policies 59 have not been considered ("NO" branch of decision block 102), process 100 may proceed to block 104.

In block 104, the process 100 selects an unprocessed or unconsidered policy 59 from the set 58 of package building policies. After an unprocessed policy 59 is selected the process 100 may proceed to block 106. In block 106, the process 100 may determine whether all travel solutions 70 and services 72 associated with the selected policy have been considered. In response to determining all travel solutions 70 and services 72 associated with the selected policy have been considered ("YES" branch of decision block 106), the process 100 may proceed to block 102. In response to determining all packages associated with the selected policy have not been considered ("NO" branch of decision block 106), the process 100 may proceed to block 108.

In block 108, process 100 selects an unconsidered travel solution 70, service 72, or pre-built package 68, depending on the configuration or particular embodiment of process 100 and packaging system 60. In one embodiment of the present invention, process 100 may build a prospective package in block 108 by selecting a travel solution 70 and combining the travel solution 70 with appropriate services 72. In another embodiment of the present invention, prospective packages are built before process 100 begins and made available for selection by block 108. To that end, block 108 determines a package 68 for consideration by process 100 and provides this package 68 to block 110.

In block 110, process 100 determines the cost of the package 68 by taking into account whether the passenger has already been pre-booked. Multiple cost elements are taken into account in order to compare the overall cost to the travel carrier beyond a simple monetary value. Cost elements, such as the yield of the seats that are taken by the package 68, the costs of the services 72 associated with the package 68 and the yield of the seats that are freed if the passengers transferred out of a pre-booked option, are taken into consideration to determine the true cost of the package 68 to the travel carrier. Further, these elements may be customizable by the travel carrier or administrator of package building system 60 to fine tune the package building process. For example, more weight may be given to the cost of the services 72 if the travel carrier does not perform the service 72 and therefore does not earn a profit off the service 72. Thereafter, the process 100 may proceed to block 112.

In block 112, process 100 may determine the passenger satisfaction with the package 68. In one embodiment of the present invention, the determination of passenger satisfaction is provided by three separate considerations. In this embodiment, passenger satisfaction is calculated by considering (1) the quality of the package 68; (2) the relevance of the package 68 versus the underlying associated policy 59; (3) and the relevance of the package 68 for the passenger.

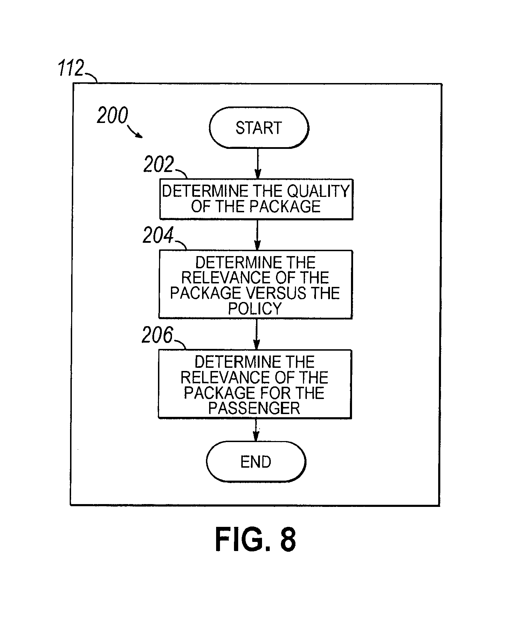

Referring now to FIG. 8, a flow chart depicts a process 200 that may be executed by process 100 to determine passenger satisfaction within block 112 using the three aforementioned considerations. Process 200 begins with block 202, wherein the process 200 determines the quality of the package 68. The quality calculated by process 200 in block 202 is the absolute value of the package 68 proposed to the impacted passenger. This absolute value is calculated independently from the underlying associated package policy 59 that was used to construct the associated package 68. The quality considers both the value or appropriateness of the travel solution 70 and the value or appropriateness of the associated services 72 in the package 68. However, this quality is not necessarily a straight monetary amount. The package quality or value may be calculated based on rules defined by the travel carrier, such as the elapsed flying time, the elapsed ground time, the number of stops, or the class of service for each proposed leg the travel solution 70 within the package 68. After the travel carrier rules are used to assign an absolute value to the package 68, process 200 proceeds to block 204.

In block 204, the process 200 may determine the relevance of the package 68 with respect to the underlying policy 59 that generated the package 68. This determination may include comparing the value of the package 68 relative to the underlying packaging building policy 59 to determine how closely the package 68 matches the policy 59 and the associated search criteria therein. However, each package building policy 59 includes a specific way to calculate relevance. This internal relevance calculation formula may be based on factors such as the time the passenger is required to wait, the delay at the final destination, the number of optional services that could fit within the proposed package 68, or "dead" time or time not filled with anything useful within the proposed package 68. Thus, within block 204, the process 200 uses an internal relevance calculation provided by the underlying policy 59 to determine the relevance of the package 68 and thereafter proceeds to block 206.

In block 206, the process 200 determines the relevance of the package 68 for the impacted passenger or the passenger's perceived value of the package 68. Block 206 provides information regarding how the package 68 components align with the impacted passenger's preferences and may output a score for using determining the relevance of the package 68 for the passenger. This score may also be correlated to a predicted passenger feedback rating of mutual, favorable, or negative feedback based on information regarding the passenger preferences and the underlying trip context. For example, if a proposed package 68 includes a stay at a passenger's preferred hotel chain, block 206 calculates a score indicating that this package 68 will likely receive a favorable rating from the passenger. After the package relevance with respect to the passenger is determined, process 200 terminates. This termination may represent block 112 proceeding to block 114.

Referring now to FIG. 7, in block 114, the process 100 may determine the value of the passenger with respect to the travel carrier. The value of the passenger will affect how much the underlying travel carrier is prepared to invest with the re-accommodation. In one embodiment of the present invention, the value of the passenger may be determined by retrieving information stored in customer relationship management system 22. This may be a predetermined number calculated by a separate service of the underlying travel carrier. This information may be a mix of the value of the current trip, frequent flyer value, the passenger lifetime value, or the anticipated passenger value. The passenger's history with the underlying travel carrier and in particular the previous disruption history or disruption score from the previous travels may positively affect the importance of the passenger. After the value of the passenger is determined or collected in block 114, the process of gathering all the relevant values for that specific package 68 is completed and block 114 returns to block 106 to determine whether all the packages associated with the policy 59 have been considered.

After all policies 59 and all the packages 68 relating to the policies 59 have been considered, the process 100 may proceed to block 116. In block 116, the process 100 ranks each package 68 constructed for each policy 59 according to: (1) the quality of the package 68, as determined in block 202; (2) the relevance of the package 68 versus the policy 59, as determined in block 204; (3) the relevance of the package 68 for the passenger or the perceived value of the package 68 by the passenger, as determined in block 206; and (4) the relevance of the policy 59 based on the trip context and the passenger information. The relevance of the policy 59 is computed prior to the process 100 and available for use by process 100 in block 116. These characteristics are compared and used to sort and rank each package 68 for each policy 59. The process 100 may proceed to block 118 after each package storage policy has been ranked.

In block 118, the top package 68 for each policy 59 is selected into a group and the process 100 may proceed to block 120. In block 120, for a given number X, the top X packages 68 from the group are selected, for example the top four packages 68 in the group may be selected. These four packages 68 represent the top scoring packages 68 in all of the packages 68 constructed for each policy 59, and are built while taking into account the passenger's trip context, preferences, and/or value to the travel carrier. These packages represent the best possible solutions for the given impacted passenger by taking into account the passenger's trip context, the passenger's preferences, and the inventory available for travel solutions 70 and services 72. The process 100 may proceed to block 122 wherein the top packages are presented to the impacted passenger for consideration and selection.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method comprising:
receiving, at a computer system, a notification of a disrupted segment;
communicating a message based upon the notification of the disrupted segment over a network to an electronic device of a passenger associated with an itinerary that includes the disrupted segment;
in response to the message, receiving, at the computer system, a request originated at the electronic device to modify the itinerary;
in response to receiving the request, identifying, by the computer system, a plurality of package-building policies based upon data in a passenger name record, data representing the itinerary, and one or more rules for each package-building policy;
for each package-building policy, querying a first availability database to determine at least one replacement segment,
computing, by the computer system, one or more travel solutions for each package-building policy in which the data representing the itinerary is modified to replace the disrupted segment with the at least one replacement segment;
querying a second availability database to determine one or more services for the one or more travel solutions of each package-building policy based at least in part on the data in the passenger name record and the data representing the itinerary; and
for each package-building policy, building, by the computer system, a package that includes a first selection from the one or more travel solutions and a second selection from the one or more services.

2. The method of claim 1 further comprising:
determining a compensation value for the disrupted segment,
wherein the first selection, the second selection, or a combination thereof is selected for the package associated built in association with at least one of the package-building policies based at least in part on the compensation value.

3. The method of claim 1 or claim 2 further comprising:
determining a passenger value for the passenger,
wherein the first selection, the second selection, or a combination thereof is selected for the package built in association with at least one of the package-building policies based at least in part on the passenger value.

4. The method of any of claims 1 to 3 further comprising:
communicating the package associated with one or more of the package-building policies to the passenger; and
receiving, at the computer system, a selected package from the passenger,
wherein the passenger selects the selected package through the electronic device.

5. The method of claim 4 further comprising:
allowing the passenger to use the electronic device to choose the selected package during a time period.

6. The method of claim 4 or claim 5 further comprising:
booking the passenger on the at least one replacement segment of the selected package.

7. The method of any of claims 4 to 6 further comprising:
updating data related to the passenger to reflect the selected package.

8. The method of any of claims 1 to 7 further comprising:
communicating the package for each package-building policy to the electronic device.

9. A system for accommodating a passenger traveling in accordance with an itinerary, the system comprising:
a processor; and
a memory including instructions that, when executed by the processor, cause the system to:
receive a notification of a disrupted segment;
communicate a message based upon the notification of the disrupted segment over a network to an electronic device of a passenger associated with an itinerary that includes the disrupted segment;
in response to the message, receive a request originated at the electronic device to modify the itinerary;
in response to receiving the request, identify a plurality of package-building policies based upon data in a passenger name record, data representing the itinerary, and one or more rules for each package-building policy;
for each package-building policy, query a first availability database to determine at least one replacement segment,
compute one or more travel solutions for each package-building policy in which the data representing the itinerary is modified to replace the disrupted segment with the at least one replacement segment;
query a second availability database to determine one or more services for the one or more travel solutions of each package-building policy based at least in part on the data in the passenger name record and the data representing the itinerary; and
for each package-building policy, build a package that includes a first selection from the one or more travel solutions and a second selection from the one or more services.

10. The system of claim 9 further including instructions that cause the system to:
determine a compensation value for the disrupted segment,
wherein the first selection, the second selection, or a combination thereof is selected for the package associated built in association with at least one of the package-building policies based at least in part on the compensation value.

11. The system of claim 9 or claim 10 further including instructions that cause the system to:
determine determining a passenger value for the passenger,
wherein the first selection, the second selection, or a combination thereof is selected for the package associated built in association with at least one of the package-building policies based at least in part on the passenger value.

12. The system of any of claims 9 to 11 further including instructions that cause the system to:
communicate the package associated with one or more of the package-building policies to the electronic device; and
receive, at the computer system, a selected package that is selected using the electronic device.

13. The system of claim 12 further including instructions that cause the system to perform the method of any of claims 5 to 8.

14. A computer program product comprising:
a non-transitory computer-readable storage medium; and
instructions stored on the non-transitory computer-readable storage medium that, when executed by a processor, cause a computer system to:
receive a notification of a disrupted segment;
communicate a message based upon the notification of the disrupted segment over a network to an electronic device of a passenger associated with an itinerary that includes the disrupted segment;
in response to the message, receive a request originated at the electronic device to modify the itinerary;
in response to receiving the request, identify a plurality of package-building policies based upon data in a passenger name record, data representing the itinerary, and one or more rules for each package-building policy;
for each package-building policy, query a first availability database to determine at least one replacement segment,
compute one or more travel solutions for each package-building policy in which the data representing the itinerary is modified to replace the disrupted segment with the at least one replacement segment;
query a second availability database to determine one or more services for the one or more travel solutions of each package-building policy based at least in part on the data in the passenger name record and the data representing the itinerary; and
for each package-building policy, build a package that includes a first selection from the one or more travel solutions and a second selection from the one or more services.

15. The computer program product of claim 14 wherein the instructions, when executed by a processor, cause the computer system to perform the method of any of claims 2 to 8.
